Europäisches Patentamt

European Patent Office

Office européen des brevets

(19)

(11) Publication number: **0 010 913**
**A1**

## (12) EUROPEAN PATENT APPLICATION

(21) Application number: 79302295.5

(22) Date of filing: 22.10.79

(51) Int. Cl.³: **F 16 K 17/14, F 16 K 17/40**

(30) Priority: 30.10.78 GB 4239278

(43) Date of publication of application: 14.05.80
Bulletin 80/10

(84) Designated Contracting States: **AT BE CH DE FR GB IT LU NL SE**

(71) Applicant: **ELECTROFABRICATION & ENGINEERING COMPANY LIMITED, Gloucester Road West Chirton Industrial Estate, North Shields Tyne & Wear, NE29 8RQ (GB)**

(72) Inventor: **Carbin, Derek Charles, 100 Queens Road, Whitley Bay Tyne & Wear (GB)**
Inventor: **Balfour, Ian David, 29 Whernside Place, Cramlington Northumberland (GB)**

(74) Representative: **Gura, Henry Alan et al, MEWBURN ELLIS & CO. 70 & 72 Chancery Lane, London WC2A 1AD (GB)**

(54) Improvements in or relating to reverse buckling disc assemblies.

(57) A composite reverse buckling disc assembly consisting of two portions, a concav-convex dome portion (2) and a support portion (6). The support portion (6) includes an annular outer part (8) for clamping between opposed inlet and outlet support means (12, 14) of a safety pressure relief device and an inner part (10) for location in the bore through said device. The dome portion (2) is located on the support portion (6) such that, on reversal of said dome portion (2) when it is subjected to the critical pressure of the assembly, said reversing dome portion (2) engages with the inner part (10) of the support portion (6) with sufficient force to break said inner part (10) away from the clamped outer part (8), whereby the dome portion (2) is released from the assembly and full-bore discharge through the safety pressure relief device occurs.

1.

# IMPROVEMENTS IN OR RELATING TO REVERSE BUCKLING DISC ASSEMBLIES

## TECHNICAL FIELD

This invention relates to reverse buckling disc assemblies for incorporation in safety pressure relief devices to be used on pressure vessels.

## BACKGROUND ART

Reverse buckling discs commonly comprise a concave-convex dome portion surrounded by an annular or substantially annular flange portion, the flange portion of the disc being held between annular inlet and outlet support means in an operative position on an associated vessel with the convex side of the dome portion being subjected to the fluid pressure within the vessel.

Such buckling discs of the 'pull-out' type are so arranged that, when the fluid pressure within the vessel reaches a critical value, the dome portion of the disc is reversed by said pressure from its normal rest position to a displaced position and the flange portion of the disc is pulled out from between the inlet and outlet support means. Thus the bore previously closed by the disc is opened to allow full-bore discharge from the vessel and fluid can flow from the vessel to relieve the pressure therein.

In order that reversal of such a disc should occur at a known, predetermined value of the pressure within the vessel it is essential that the disc should retain its original characteristics, and therefore remain

2.

undeformed from its original configuration, until said response value is reached.

It will be appreciated that, at pressures below the response pressure, the dome portion of the disc is subjected to forces which tend to urge the flange portion of the disc radially outwardly between the inlet and outlet support means and which therefore tend to alter the characteristics of the disc as a whole. In all but the highest pressure systems, the clamping force which can be exerted by the inlet and outlet support means on the flange portion of the disc and which still allows withdrawal of the flange portion on reversal is not sufficient to prevent said outward movement of the flange portion.

It has been proposed to incorporate in the disc support means an abutment for the periphery of the flange portion of the disc such as to prevent the radially outward movement of said flange portion. However, this requires separate machining of the support means, and, for effective operation of such an arrangement, it is necessary for the periphery of the flange portion of the disc, and the abutment provided therefor to be in contact with each other when the disc is positioned in its support means. This requires extremely accurate machining of both the support means and the disc which cannot always be achieved in practice.

Known reverse buckling discs of this type are only strictly applicable for use on gas pressurised systems

3.

where reversal is substantially instantaneous. However, if a damaged disc in installed in a gas system, the pressure at which the dome portion of the disc reverses may be much less than the response pressure of the disc, and reversal may not be accompanied by withdrawal of the flange portion from between its support means. Such a disc may finally fail at a pressure much higher than said response pressure.

In liquid systems, reversal of the dome portion may be slow, with insufficient energy being available to cause withdrawal of the flange portion. In such a case, the pressure required to achieve withdrawal of the flange portion of the reversed disc may again be much greater than the predetermined response pressure of the disc.

DISCLOSURE OF THE INVENTION

According to the present invention there is provded a reverse buckling disc assembly comprising a concave—convex dome portion and characterised by a support portion to the concave side of said dome portion, said support portion including an annular or substantially annular outer part adapted, in use of the assembly, to be located between opposed inlet and outlet support means of a safety pressure relief device, and an inner part adapted, in use of the assembly, to be located in the bore through said device, the arrangement being such that, in use of the assembly and on reversal of the dome portion, the inner part of the support portion is broken away from the outer part of said

4.

portion, and the dome portion is released from the assembly.

The support portion may be of a frangible material such as graphite, resin-impregnated graphite, ceramic, glass or a suitably-treated metal, the impact of the reversing dome portion with the inner part of the support portion breaking said inner part of the support portion away from the outer part of the support portion.

The support portion may include therein, between the inner and outer parts thereof, a pre-weakened region adapted to break on reversal of the dome portion. Said pre-weakened region may be, for example, a score line in the surface of the support portion remote from the dome portion, while the support portion may be of a frangible material or may be of metal, for example the same metal as the dome portion. Alternatively, the support portion may be of metal a region of which is embrittled to provide said pre-weakened region.

The support portion may comprise a substantially flat disc, while the radially outer edge of the dome portion may comprise an annular flange.

In a preferred embodiment of the invention, said annular flange, in use of the assembly, is clamped between the inner part of the support portion and the inlet support means, while said embodiment may further comprise a loading ring the thickness of which is substantially equal to that of the annular flange of

5.

the dome portion, said flange, in use of the assembly, being clamped between the inlet support means and the radially outer regions of the inner part of the support portion, and said loading ring, in use of the assembly, being clamped between the inlet support means and the outer part of the support portion.

In a further embodiment of the invention the radially outer edge of the dome portion, in use of the assembly, engages an abutment formed on the inlet support means.

In a still further embodiment of the invention, the inner part and the outer part of the support portion define between them an abutment, the dome portion being located on said support portion with the radially outer edge of the dome portion against said abutment.

In such an embodiment, the support portion may comprise a substantially disc-like member a surface of which is recessed to define said inner part, outer part and abutment therebetween.

In all embodiments, the dome portion may be secured to the inner part of the support portion by an adhesive.

The volume between the dome portion and the inner part of the support portion is conveniently vented and this may be achieved by forming the support portion of a porous material. Alternatively one or more apertures may be formed in the inner part of the support portion.

The support portion may be of annular shape and

6.

include an annular inner part forming a radially inward continuation of the outer part, the radial extent of the inner part being such as to ensure that, on reversal of the dome portion, the energy transmitted to said inner part by the reversing dome portion is such as to break said part away from the outer part of the support portion.

BRIEF DESCRIPTION OF THE DRAWINGS

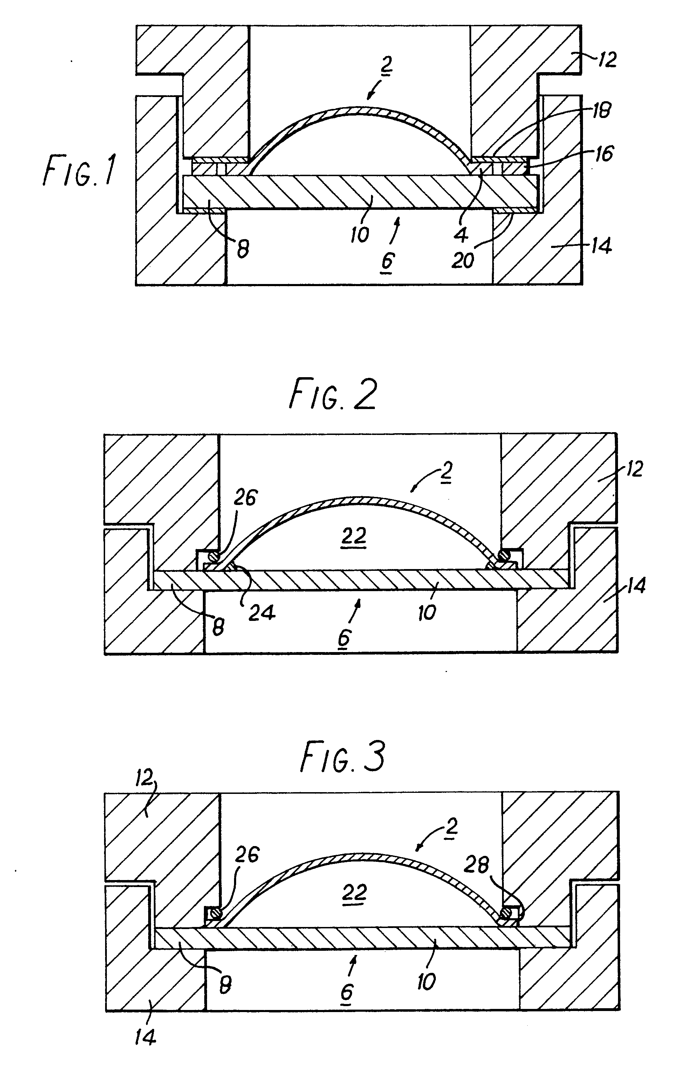

Figs 1 to 5 are vertical sections through various safety pressure relief devices incorporating reverse buckling disc assemblies according to the invention.

BEST MODES OF CARRYING OUT THE INVENTION

Referring to Fig. 1 of the drawings, the reverse buckling disc assembly illustrated therein includes a concave-convex dome portion of metal, for example of stainless steel, nickel or monel, indicated generally at 2, the radially outer edge region of said portion comprising an annular flange 4.

The assembly further includes a support portion 6 of uniform thickness in the form of a flat disc of a frangible, porous material such as graphite, the portion 6 comprising an annular outer part 8 and a circular inner part 10 forming a radially-inward continuation of said outer part.

The assembly is shown positioned in a safety pressure relief apparatus which includes annular inlet and outlet support member 12,14 respectively. The outer part 8 of the support portion 6 is located between

7.

the inlet and outlet support members with the junction between the inner and outer parts of the support portion coinciding with the radially inner edge of the outlet support member 14. The radially inner edge of the inlet support member 12 projects further inwardly of the apparatus than the radially inner edge of the outlet support member 14, and the annular flange 4 of the dome portion 2 is rigidly clamped between said inlet support member and the radially outer regions of the inner part 10 of the support portion 6.

A loading ring 16 is positioned between the inlet support member 12 and the outer part 8 of the support portion 6, said ring 16 preferably being punched from the same piece of metal as the dome portion 2 and therefore being of the same thickness as the flange 4. Thus it will be appreciated that said ring serves to even out the load applied to the dome portion 2 and the support portion 6 by the inlet and outlet support members 12,14.

A pair of compressed asbestos fibre gaskets 18,20 are located as shown to ensure a fluid-tight seal between the two sides of the disc assembly.

Once clamped in position, the assembly provides a composite structure having a predetermined critical reversal pressure. The volume 22 between the dome portion 2 and the support portion 6 is vented by virtue of the porous nature of the material of the latter

8.

portion thus obviating any pressure build-up within said volume.

Under normal operating conditions, it will be appreciated that any tendency for the outer regions of the dome portion 2 to move radially outwardly due to the pressure applied thereto is prevented by the clamping pressure exerted by the inlet and outlet support members 12,14. Further, the annular extent of the inner part 10 of the support portion 6 below the flange 4 of the dome portion 2 provides a support for said dome portion.

However, once the critical pressure of the composite assembly is reached, the dome portion 2 reverses and engages the inner part 10 of the support portion 6. The brittle or frangible nature of the material of the portion 6 is such that the inner part 10 thereof is broken away from the fixed outer part 8 thereof at the junction therebetween which, as mentioned above, coincides with the radially inner edge of the member 14. Thus the whole central portion of the composite disc - i.e. the dome portion 2 and the inner part 10 - is removed to permit full-bore discharge from the overpressurised system. The pressure at which the frangible support portion 6 collapses is predetermined at a value considerably less than the response pressure of the dome portion 2.

When such a composite assembly is subjected to pressure surges such as can occur in liquid systems,

9.

the dome portion may be deformed without actually reversing, thus altering the characteristics of the disc. In such a case, as in a case where the metal dome portion 2 of an installed disc is damaged, reversal may occur at a pressure lower than the critical pressure. However, unlike established arrangements in which reversal may not be accompanied by withdrawal, the moment the dome portion 2 of the illustrated arrangement rolls through to a reversed position, the frangible support portion 6 is broken and the dome portion 2 and inner part 10 of the support portion 6 are released. Thus a 'fail-safe' device is provided. Further, the necessity for accurate machining of the component parts of the assembly is obviated.

The inner part 10 of the support portion 6 may not be of a continuous nature, but may be of annular construction forming a radially inward extension of the part 8. The extent of said part 10 must be such as to ensure that contact by the reversing dome portion 2 results in breakage of the part 10 from the part 8.

As mentioned above, the material of the frangible portion 6 may be graphite which may be resin-impregnated in such a way as still be to porous. If a non-porous frangible material, such as non-porous graphite, glass, ceramics or a suitably treated metal, is used to form a continuous support portion 6, the inner part 10 of said portion may be apertured to provide the

10.

necessary venting of the volume 22.

Referring to Fig. 2 where parts equivalent to those in Fig. 1 are similarly referenced, the support portion 6 is again a substantially flat disc of a frangible material. The outer part 8 of the support portion is clamped directly between the inlet and outlet support members 12,14, while any tendency for the edge regions of the dome portion 2 to move radially outwardly relative to the fixed support portion is, for the main part, prevented by an adhesive 24 which secures the dome portion 2 to the inner part 10 of the support portion 6. Although a sealing ring 26 provides some degree of restriction of movement of the dome portion 2, said ring is primarily present to prevent a leak path round the edge of the disc.

In the embodiment of Fig. 3, the outer annular part 8 of a flat, disc-shaped support portion 6 is clamped directly between inlet and outlet support members 12,14, the inlet support member 12 being shaped to provide a radial abutment 28 for the dome portion 2 of the disc and thus prevent any undesired radially outward movement of the edge regions of said dome portion. Again a sealing ring 26 prevents a leak path from the higher pressure side to the lower pressure side of the device.

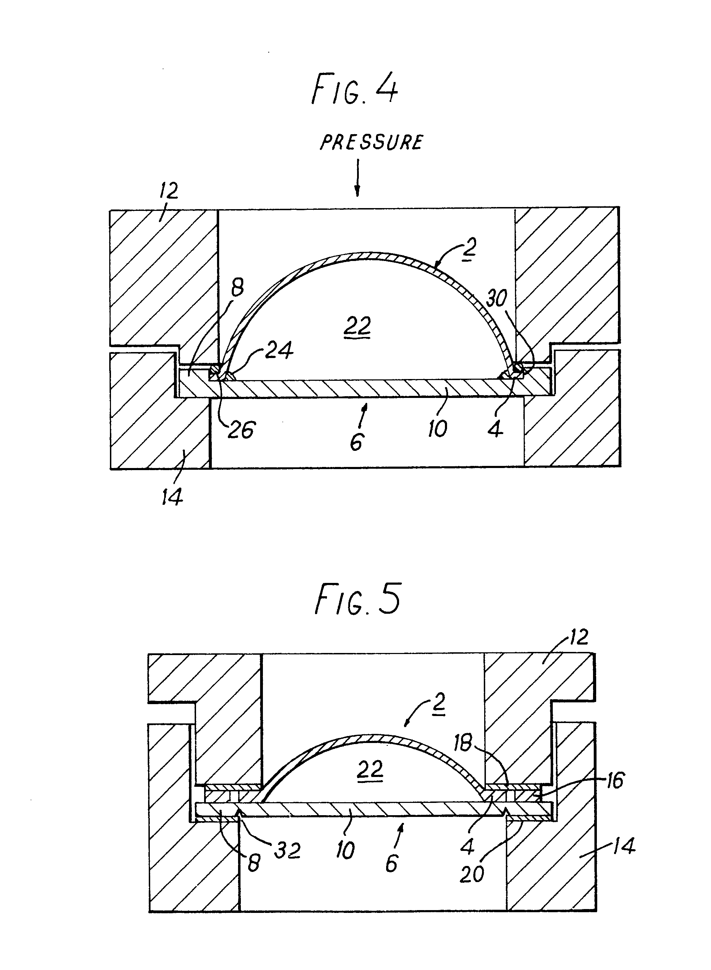

Referring to Fig. 4, where parts equivalent to those of Fig. 1 to 3 are similarly referenced, the support portion 6 comprises an annular outer part 8 and a reduced thickness, circular inner part 10, an upstanding shoulder 30 being defined between said inner and outer parts.

The dome portion 2 is secured by adhesive 24 to the inner part 10 of the support portion 6 with the edge of the flange 4 of the dome portion abutting the shoulder 30 of the support portion.

The outer part 8 of the support portion 6 is located between the inlet and outlet support members 12,14, a sealing ring 26 being clamped between the inlet support member 12 and the flange 4 of the dome portion 2 to effect a fluid-tight seal on the pressurised side of the system.

Radially outward movement of the outer regions of the dome portion is thus prevented by the combined effects of the shoulder 30, the adhesive 24 and the clamping pressure exerted through the sealing ring 26.

The assembly may be clamped in the safety pressure relief device by direct contact of the inlet and outlet support members 12,14 with the outer part 8 of the support portion 6, the limit on the clamping pressure exerted by the support members being determined by the particular material used for the support portion 6.

Although Fig. 4 shows a dome portion 2 having an annular flange 4, it is to be emphasised that a non-flanged dome portion making substantially linear contact

12.

about its periphery with the support portion 6 could be used.

Fig. 5 illustrates an embodiment similar to that of Fig. 1 except that the undersurface of the support portion 6, at the junction between the inner and outer parts 10,8 thereof, is scored at 32 to provide a region of weakness in said portion 6. The support portion 6 may be of a frangible material or may be of metal, for example the same as or similar to that of the dome portion 2. Clearly the provision of a pre-weakened region 32 in the support portion 6 further assists breakage of the support portion 6 at the desired location.

Instead of scoring the support portion 6 as shown in Fig. 5, a metal support portion may be pre-weakened by, for example, embrittling the desired region.

From the above-detailed embodiments, it will be appreciated that radially outward movement of the edge regions of the dome portion can be prevented in any one of a number of different methods, for example by securing the dome portion to the support portion such as by an adhesive or by brazing, by providing a radial abutment for said edge region or by applying a clamping load to said edge region. It will be further appreciated that these methods may be used singly or in combination.

In all cases the support portion 6, on reversal of the dome portion 2, breaks in such a manner that the inner part 10 thereof, together with the dome portion 2, is removed from its operative portion to relieve pressure in the overpressurised system, while the outer part 8 of the support portion 6 remains in position between the inlet and outlet support members 12,14.

Modifications and variations from the illustrated arrangements will be apparent to those skilled in the art.

14.

## CLAIMS

1.  A reverse buckling disc assembly comprising a concave-convex dome portion (2) and characterised by a support portion (6) to the concave side of said dome portion (2), said support portion (6) including an annular or substantially annular outer part (8) adapted, in use of the assembly, to be located between opposed inlet and outlet support means (12,14) of a safety pressure relief device, and an inner part (10) adapted, in use of the assembly, to be located in the bore through said device, the arrangement being such that, in use of the assembly and on reversal of the dome portion (2), the inner part (10) of the support portion (6) is broken away from the outer part (8) of said support portion (6), and the dome portion (2) is released from the assembly.

2.  An assembly as claimed in claim 1 in which the support portion (6) is of a frangible material.

3.  An assembly as claimed in claim 2 in which the frangible material is graphite, resin-impregnated graphite, ceramic, glass, or a suitably-treated metal.

4.  An assembly as claimed in claim 2 or claim 3 in which the support portion (6) comprises a substantially flat disc.

5.  An assembly as claimed in claim 4 in which the radially outer edge of the dome portion (2) comprises an annular flange (4).

6.  An assembly as claimed in claim 5 in which, in

15.

use of the assembly, the annular flange (4) is clamped between the inner part (10) of the support portion (6) and the inlet support means (12).

7. An assembly as claimed in claim 6 and further comprising a loading ring (16) the thickness of which is substantially equal to that of the annular flange (4) of the dome portion (2), said flange (4), in use of the assembly, being clamped between the inlet support means (12) and the radially outer regions of the inner part (10) of the support portion (6), and said loading ring (16), in use of the assembly, being clamped between the inlet support means (12) and the outer part (8) of the support portion (6).

8. An assembly as claimed in any one of claims 4 to 6 in which the radially outer edge of the dome portion (2), in use of the assembly, engages an abutment (28) formed on the inlet support means (16).

9. An assembly as claimed in claim 2 or claim 3 in which the inner part (10) and the outer part (8) of the support portion (6) define between them an abutment (30), the dome portion (2) being located on said support portion (6) with the radially outer edge of the dome portion (2) against said abutment (30).

10. An assembly as claimed in claim 9 in which the support portion (6) comprises a substantially disc-like member a surface of which is recessed to define said inner part (10), outer part (8) and abutment (30) therebetween.

16.

11. An assembly as claimed in any one of claims 1 to 1 in which the dome portion (2) is secured to the inner part (10) of the support portion (6) by an adhesive (24).

12. An assembly as claimed in claim 1 in which the support portion (6) includes therein, between the inner part (10) and the outer part (8) thereof, a pre-weakened region adapted to break on reversal of the dome portion (2C).

13. An assembly as claimed in claim 12 in which the support portion is of metal, the pre-weakened region comprising a score line in the surface of the support portion remote from the dome portion.

14. An assembly as claimed in claim 12 in which the support portion is of metal a region of which is embrittled to provide said pre-weakened region.

15. An assembly as claimed in any one of claims 1 to 14 in which the volume (22) between the dome portion (2) and the support portion (6) is vented.

16. An assembly as claimed in claim 15 when dependent from any one of claims 1 to 12 in which the support portion (6) is of a porous material.

17. An assembly as claimed in claim 15 in which one or more apertures are formed in the inner part (10) of the support portion (6).

18. An assembly as claimed in any one of claims 2, 3,12,13, or 14 in which the support portion (6) is of annular shape and includes an annular inner part forming

17.

a radially inward continuation of the outer part.

0010913

Fig.1

Fig. 2

Fig. 3

0010913

FIG. 4

PRESSURE

FIG. 5

| | DOCUMENTS CONSIDERED TO BE RELEVANT | | | CLASSIFICATION OF THE APPLICATION (Int. Cl.) X 3 |
|---|---|---|---|---|
| Category | Citation of document with indication, where appropriate, of relevant passages | | Relevant to claim | |
| A | <u>DE - B - 1 186 718</u> (BAD. ANILIN) <br> + Fig. 1 + <br> -- | | 1,2 | F 16 K 17/14 <br> F 16 K 17/40 |
| X | <u>DE - A1 - 2 706 723</u> (CONT.DISC. CORP.) <br> + Totality + <br> -- | | 1,2,5, 6,17,18 | |
| X | <u>DE - A - 2 009 526</u> (BLACK) <br> + Fig. 4,5 + <br> -- | | 1,2,5, 6,18 | |
| A | <u>AT - B - 250 748</u> (HOECHST) <br> + Page 2, lines 25 to 30 + <br> -- | | 3 | TECHNICAL FIELDS SEARCHED (Int.Cl.) X 3 |
| A | <u>FR - E - 89 600</u> (CARBONE-LORRAINE) <br> + Totality + <br> -- | | 3,4 | F 16 K 17/oo <br> F 16 K 17/oo <br> F 16 K 17/oo |
| A | <u>GB - A - 1 444 206</u> (MARSTON) <br> + Totality + <br> -- | | 8 | |
| A | <u>DE - A - 1 943 291</u> (MESSERSCHMITT) <br> + Totality + <br> -- | | 8,9 | |
| A | <u>DE - B - 1 234 116</u> (BAD. ANILIN) <br> + Totality + <br> -- | | 8,9,10, 11 | CATEGORY OF CITED DOCUMENTS <br> X: particularly relevant <br> A: technological background <br> O: non-written disclosure <br> P: intermediate document |
| A | <u>DE - A - 2 116 046</u> (INTERTHERM) <br> + Totality + <br> -- | | 12,13, 14 | T: theory or principle underlying the invention <br> E: conflicting application <br> D: document cited in the application <br> L: citation for other reasons |
| A | <u>CH - A - 401 622</u> (ENERGIE ATOM.) <br> + Fig. 1,2 + <br> ---- | | 15 | |
| X | The present search report has been drawn up for all claims | | | &: member of the same patent family, corresponding document |

| Place of search | Date of completion of the search | Examiner |
|---|---|---|
| VIENNA | 20-12-1979 | PALLA |

EPO Form 1503.1  06.78